Europäisches Patentamt

**European Patent Office**

**Office européen des brevets**

(11) Publication number: **0 256 777**
**A2**

(12) **EUROPEAN PATENT APPLICATION**

(21) Application number: **87306948.8**

(22) Date of filing: **05.08.87**

(51) Int. Cl.⁴: **B29C 49/64 , B29C 49/06**

(30) Priority: **11.08.86 US 895069**

(43) Date of publication of application:
**24.02.88 Bulletin 88/08**

(84) Designated Contracting States:
**DE FR GB IT NL**

(71) Applicant: **JOHNSON SERVICE COMPANY**
**5757 North Green Bay Avenue P.O. Box 591**
**Milwaukee, WI 53201(US)**

(72) Inventor: **Granata, John Joseph**
**1809 Strathmoor Avenue**
**Toledo Ohio 43614(US)**

(74) Representative: **Williams, Trevor John et al**
**J.A. KEMP & CO. 14 South Square Gray's Inn**
**London WC1R 5EU(GB)**

(54) **Method and apparatus for injection blow moulding pet containers.**

(57) Method and apparatus for injection blow molding hollow articles from polyethylene terephthalate (PET) resin utilizing a hollow core rod on which a parison is first injection molded, and subsequently stretched and blown to form the hollow article. Fluid is continuously circulated through the hollow core rod to promote cooling of the plastic and insure the production of hollow articles that are transparent and of high quality from a clarity standpoint. A separate supply of blow air is provided at the blow molding station so as not to interfere with the continuous flow of coolant through the hollow core rod.

FIG. 1

EP 0 256 777 A2

## METHOD AND APPARATUS FOR INJECTION BLOW MOULDING PET CONTAINERS

This invention relates to an improved method and apparatus for injection blow molding containers from polyethylene terephthalate (PET) resin. The present invention is an improvement over the method disclosed in U.S. Patent 4,356,142.

In the process of this invention, a PET melt at a temperature in the 260-302°C (500-575°F) range is directed to an injection mold utilizing a hollow core rod. The injection mold is cooled by a continuous circulation of cooling water at controlled temperatures through defined zones in the mold walls. Cooling fluid is also continuously circulated through the hollow core rod during injection molding so as to achieve a predetermined core rod temperature profile along the length of the rod.

The cooled injection molded parison is then transferred on the core rod to a blow mold station while maintaining the circulation of cooling fluid internally through the core rod. At the blow mold station, a separate supply of blow air is directed through the injection molded preform. The hollow core rod with the blow molded container thereon is then moved to the strip station where the container is stripped off the core rod, following which the core rod moves to the injection mold station where a subsequent parison is injection molded on the core rod.

During movement of the core rod through the injection mold, blow mold and strip stations, the cooling fluid is continuously circulated internally through the core rod.

PET is known as a highly heat sensitive and crystalization prone plastic. The objective in the method of this invention is to avoid crystalization of the PET during forming of the container so as to obtain transparent containers of high clarity. The whole problem of clarity involves crystalite size, (i.e., small enough crystals to minimize light scattering) and amorphous density which is increased by orientation. In the method and apparatus of this invention, the strength achieved by orientation is not necessary; the clarity achieved by small crystalite size is desired.

These objectives are achieved in this invention by:

1. profiling the cooling water temperature in the various injection mold zones so that the various parts of the molded parison are at temperatures that will yield a desired distribution of material in the blow molded container;

2. retaining the plastic in the injection mold for a time sufficient to insure a uniform temperature of the molded parison through the walls thereof to further insure the desired distribution of material in the blow molded container (in other words, at any point on the wall of the parison, the inner surface and the outer surface and the plastic therebetween are all at substantially the same temperature); and

3. providing for the continuous cooling of the core rod so that a desired core rod temperature profile of relatively narrow range is maintained. This enables continuous repeatability of the process so that containers of uniform quality can be continuously produced on the apparatus.

The continuously cooled core rod in the method and apparatus of this invention provides for rapid cooling of the parison to in turn enable blow molding of each container at a PET temperature significantly below the melt temperature of 260-302° (500°-575°F) but above the glass transition temperature of about 73°C (163°F). The continuous cooling of the hollow core rod promotes parison cooling from the inside.

In conjunction with the continuous cooling of the hollow core rod, by either air or liquid cooling, a separate supply of blow air for expanding the parison into conformity with the blow mold cavity is provided. This provision of a separate source of blow air insures continuity of flow of cooling fluid through the hollow core rod. Also, the core rod is structured so that the blow air is supplied at the blow molding station only in response to axial extension of the core rod to stretch the parison in an axial direction. This arrangement insures concurrent axial and radial stretching of the parison to expand the parison into conformity with the mold cavity and insure the desired distribution of PET in the container over the axial length of the container.

The result is an improved method and apparatus for continuously producing clear PET containers of uniform quality.

Further objects, features and advantages of the invention will become apparent from a consideration of the following description and the appended claims when taken in connection with the accompanying drawing in which:

Fig. 1 is a plan view of the apparatus of this invention;

Fig. 2 is a longitudinal sectional view of a core rod in the apparatus of this invention, showing the core rod at the injection molding station at which a parison is formed on the core rod; and

Fig. 3 is a longitudinal sectional view of the core rod in the apparatus of this invention in position at the blow molding station and in a position to supply blow air to the blow mold cavity.

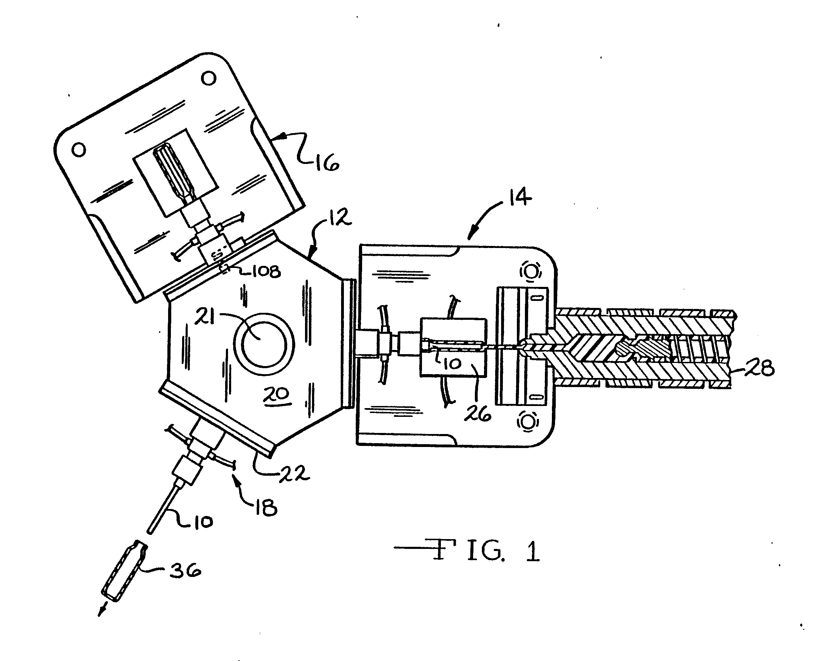

With reference to the drawing, the core rod of this invention, indicated generally at 10, is illustrated in Fig. 1 in a blow molding machine 12 illustrated as having three operational stations, namely, an injection station 14, a blow station 16, and a stripper station 18. The machine 10 also includes an indexing head 20 which rotates about a center 21 and has three faces 22 which move intermittently through angles of 120° to bring the core rods 10 into working relationship with the operational stations 14, 16 and 18. It is to be understood that each of the faces 22 can have a plurality of core rods 10 extending therefrom but for purposes of illustration, only one core rod 10 is shown for each face 22.

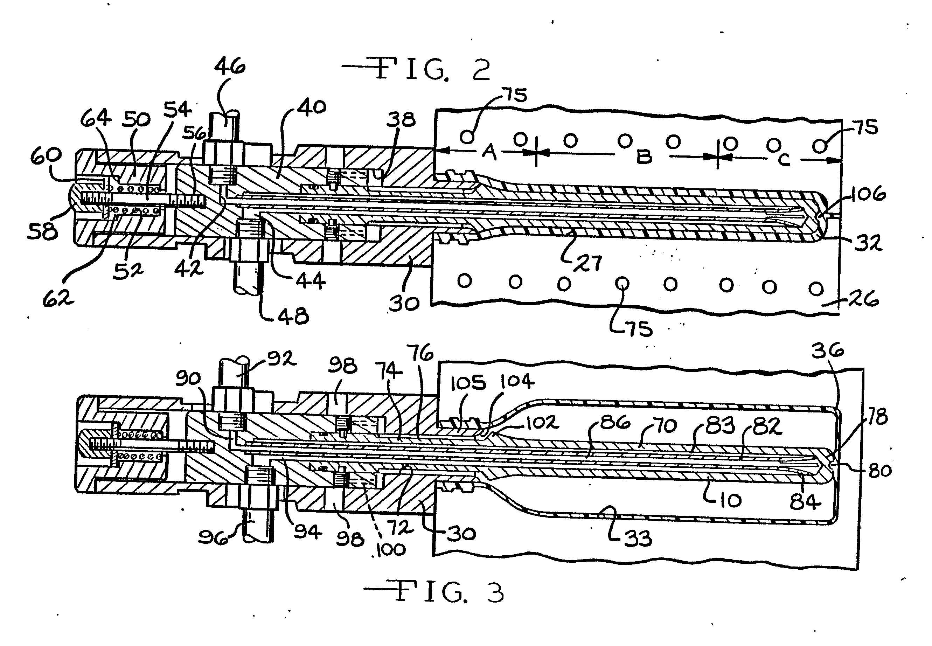

The injection station 14 includes an injection mold 26 having a cavity 27 (Fig. 2). A reciprocating or continuously rotating screw plasticizer 28 is movable in the direction of its length toward and from the mold 26 so as to bring the discharge end of the plasticizer to the inlet end of the mold 26 so that molten material from the plasticizer 28 can be discharged into the injection mold cavity 27. Molten plastic from the plasticizer 28 fills the cavity 27 which extends to the mounting block 30 for the core rod 10 (Fig. 2).

When the mold 26 at the injection mold station 14 is opened, the indexing head 18 is moved to position the core rod 10 and the plastic parison 32 formed thereon into a clearance relation ' with the mold 26, following which the indexing head 18 is rotated to move the core rod 10 to the next operational station, namely, the blow molding station 16. At the blow molding station 16, the parison 32 is stretched axially and subjected to the circumferentially stretching effect of blow air to expand the parison 32 into conformity with the blow mold cavity 33 so as to form the desired container 36. Following blow molding of the container 36, the blow mold is opened and the head 20 is again indexed to move the core rod 10 with the blow molded container 36 thereon to the stripper station 18. At the stripper station 18, the blow molded container 36 is stripped from the core rod 10, the details of the stripper station structure and other details of the machine 18 being more particularly described in U.S. Patent 4,336,015. The head 20 is then indexed one more·time to return the core rod 10 to the injection station 14 for formation of another parison 32, as heretofore described.

As shown in Figs. 2 and 3, the mounting block 30 has an axially extending hollow cavity 38 formed therein. Slidably mounted within the cavity 38 is a block 40 having an inlet passage 42 for cooling fluid and an outlet passage 44 for the cooling fluid. The passage 42 communicates with an inlet line 46 for cooling fluid and the passage 44 communicates with an exhaust line 48. The outer end portion of the cavity 38 is closed by a plug member 50 having an internal cavity 52 in which a rod member 54 is slidably mounted. The rod 54 is secured at its inner end 56 to the block 40. At its outer end, the bar 54 is secured to an actuating button 58 which is in turn secured to a stabilizing plate 60 that is slidably mounted in the cavity 52. A spring 62 extends between the plate 60 and the bottom end of the cavity 52 so as to urge the button 58 to its outwardly projecting position shown in Fig. 2 in which it projects axially outwardly from the cavity 52.

As shown in Fig. 3, the actuator 58 is movable inwardly to the stop position shown in Fig. 3 in which the plate 60 bottoms out on a shoulder 64 formed in the cavity 52. In response to such movement, the block 40 is moved inwardly to the position shown in Fig. 3 for purposes to appear presently. The core rod 10 also includes an elongated hollow body 70 which is telescoped into an axial cavity 72 in the block 40 and is secured to the block 40 so that the base section 74 of the core rod 10 is in a clearance relation with the mounting block 30 to provide an annular passage 76 in the block 30, around the outer surface of the core rod 70.

The tip end 78 of the core rod body 70 is of rounded shape, closing the end of the hollow body 70 and provided with a dimple 80 for a purpose to appear presently.

Telescopically mounted with the core rod body 70 is a conductor tube 82 of smaller outer diameter than the inner diameter of the body 70 to thereby provide an annular passage 83 between the tube 82 and the body 70. The outer end of the tube 82 is provided with a plurality of outwardly extending and circumferentially spaced fingers 84 which engage the inner surface of the body 70 and provide support for the tube 82 within the body 70 and also provide for a free fluid connection between the passage 86 within the tube 82 and the annular passage 83 outside the tube 82.

The passage 42 in the block 40 connects the tube passage 86 with the inlet line 46 for cooling fluid, preferably a cooling liquid, supplied to the core rod 10. The passage 44 in the block 40 communicates with the discharge line 48 and also communicates with the passage 83. As a result, cooling fluid from the inlet line 46 can pass through the passage 86 to the tip end 78 of the core rod body 70, then flow into the passage 83 for flow in a reverse direction to the exhaust line 48. This flow of cooling fluid is utilized in the method and apparatus of this invention to provide for a continuing temperature profile along the length of the core rod 10 during operation of the machine 12 to form containers 36. This temperature profile is also affected by the flow of cooling liquid through cooling passages 75 in the injection mold body 26. The passages are divided into zones A, B & C, hereinafter referred to as base, center and tip zones, respectively. The water temperatures in these zones are varied depending on the configuration of the container 36 and the various wall thicknesses therein. In general however zone A varies from 13-54°C (55-130°F), zone B from 15-60°C (60-140°F) and zone C is over 68°C (155°F) to ensure the necessary distribution of material in the bottom portion of the container 36.

The mounting body 30 for the core rod 10 also has inlet passages 98 for blow air which communicate with passages 100 formed in the block 40 which in turn with the passage 76 in the mounting body 30. As shown in Fig. 2, when the core rod body 70 is in its retracted position, a radially outwardly extending shoulder 102 on the body 70 seats against an annular surface 104 on a tubular extension 105 of the mounting body 30 to close the passage 76. However, when the core rod body 70 is axially extended, as shown in Fig. 3, the shoulder 102 is moved into a clearance relation with the surface 104 to enable blow air to flow from the passage 76 into the parison 32 so as to expand it into conformity with the mold davity 33 as shown in Fig. 3.

This expansion of the parison 32 in a circumferential direction, in response to the action of blow air, takes place concurrently with the axial stretching of the parison 32 in response to the axial movement of the core rod body 70. The dimple 80 in the tip end section 78 of the core rod body 70 coacts with a projection 106 formed on the parison 32, so as to stabilize the parison 32 during axial stretching and avoid any radial shifting of the parison 32 during blowing.

Any suitable apparatus can be provided for actuating the actuator 58 at the blow station 16 to provide for stretching and blowing of the parison 32. In Fig. 1, a cam 108 is illustrated but it is to be understood that other actuating devices can be mechanically associated with the actuator 58 to provide the appropriate actuation.

While a parison 32 is being blown at the blow station 16, another parison 32 is being formed at the injection station 14. When the head 20 is next indexed, the blow molded container 36 that was formed at the station 16 is moved to the stripper station 18 where it is removed from the core rod 10. The above described procedures at the injection station 14 and the blow mold station 16 are then repeated for the core rods 10 located at those stations.

From the above description, it is seen that this invention provides apparatus 12 which performs a method for producing containers 36 by the injection-blow process. The containers 36 in the process of this invention are formed from a PET melt which is supplied to the mold cavity 27 at the injection station 14 at a temperature in the range of 260-302°C (500-575°F). Circulating water is supplied to the injection and blow molds by supply lines 110 with the circulating water being at the temperatures in the various zones described above. Cooling fluid is also supplied through the inlet line 46 to the core rod 10.

In a preferred embodiment of the invention, the supply of cooling fluid to the core rod 10 is maintained at all of the stations 14, 16 and 18. However, it is to be appreciated that under some operating circumstances, it may not be necessary to continue cooling at the stripper station 18. However, in all cases, the cooling fluid will be circulated through the core rod 20 at the injection station 14 and the blow station 16. This continuous flow of cooling fluid through the core rods 10 at these stations insures the desired clarity in the bottle 36. This is accomplished by maintaining the crystalite size small enough to prevent the formation of a hazy bottle 36.

## Claims

1. A method for injection blow molding transparent containers from a PET melt at a temperature in the 260-302°C (500-575°F) range utilizing an injection mold, a hollow core rod and a blow mold, and employing injection mold, blow mold and strip stations, said method comprising the steps of:

a) injecting said PET melt into said injection mold at a position around said core rod so as to form a hollow parison in said mold on said core rod;

b) cooling the injection mold by subjecting the mold to the action of circulating cooling water maintained at predetermined temperatures in separated zones along the length of said core rod in said injection mold;

c) profiling the cooling water temperatures in the injection mold zones so that the various parts of the molded parison are at temperatures that will yield a desired distribution of material in the blow molded container;

d) maintaining the parison in the injection mold for a time sufficient to insure a uniform temperature of the molded parison through the walls thereof to further insure the desired distribution of material in the blow molded container;

e) circulating fluid internally through said core rod during injection and blow molding so as to cool said core rod;

f) providing a supply of blow air to said core rod in the blow mold station to blow the previously injection molded parison and expand said parison to form a container; and

g) stripping the blow molded container from said core rod at said strip station.

2. A method for injection blow molding transparent containers from a PET melt at a temperature in the range 260-302°C (500-575°F) utilizing an injection mold, a hollow core rod and a blow mold, and employing injection mold, blow mold and strip stations, said method comprising the steps of:

a) cooling the injection mold by subjecting the mold to the action of circulating water at predetermined temperatures in separated zones along the length of said core rod;

b) circulating fluid internally through said core rod during injection and blow molding so as to cool said core rod;

c) providing a supply of blow air to said core rod in the blow mold station substantially concurrently with extending said blow rod axially to stretch and blow the previously injection molded parison and expand said parison to form a container; and

d) stripping the blow molded container from said core rod at said strip station.

3. The method according claim 2 further including circulating fluid through said core rod at said strip station.

4. For use in apparatus having injection, and blow molding stations for injection blow molding PET to form transparent containers, a core rod assembly comprising a base section having a first inlet for blow air and a second inlet for cooling fluid, an elongated hollow body mounted on said base section for axial sliding movement between a retracted injection position and an extending blow position, said body communicating the inside of said parison with said blow air inlet in the extended position, said body having a tip section remote from said base section, and means forming a cooling fluid supply conduit internally of said body communicating with said inlet for cooling fluid in both said injection and blow mold stations, said conduit being spaced from said body and terminating in a spaced relation with said tip section so as to form a return passage in said body for said cooling fluid between said body and said conduit.

5. The core rod assembly according to claim 4 wherein said conduit has circumferentially spaced and radially outwardly extending terminal end sections frictionally engaging said tip section to locate said conduit radially with said body and in a predetermined fixed position relative to said body in which fluid from said conduit can flow outwardly into said body through the spaces between said terminal end sections.

FIG. 1

0 256 777

0 256 777

FIG. 2

FIG. 3